# EUROPÄISCHE PATENTSCHRIFT

(11) **EP 3 631 379 B1**
(45) Veröffentlichungstag und Bekanntmachung des Hinweises auf die Patenterteilung: **31.05.2023**
(21) Anmeldenummer: 18723491.9
(22) Anmeldetag: 08.05.2018
(51) Int. Cl.: G01F 1/84, G01F 25/10

(54) **MESSAUFNEHMER ZUM MESSEN DES MASSENDURCHFLUSSES EINES STRÖMUNGSFÄHIGEN MEDIUMS**
SENSOR FOR MEASURING THE MASS FLOW RATE OF A FLOWABLE MEDIUM
CAPTEUR DE MESURE POUR MESURER LE DÉBIT MASSIQUE D'UN MILIEU FLUIDE

(30) Priorität: 02.06.2017 DE 102017112271
(43) Veröffentlichungstag der Anmeldung: 08.04.2020
(73) Patentinhaber: Endress+Hauser Flowtec AG, 4153 Reinach (CH)
(72) Erfinder: HUBER, Christof, 3007 Bern (CH); SCHWENTER, Benjamin, 4226 Breitenbach (CH); MUNDSCHIN, Dieter, 4410 Liestal (CH); SCHÜTZE, Christian, 4055 Basel (CH)
(74) Vertreter: Hahn, Christian
(86) Internationale Anmeldenummer: PCT/EP2018/061859
(87) Internationale Veröffentlichungsnummer: WO 2018/219603

(56) Entgegenhaltungen:
- EP-A1- 0 518 124
- EP-A1- 2 199 756
- WO-A1-2015/076676

## Beschreibung

Die vorliegende Erfindung betrifft einen Messaufnehmer zum Messen eines Massedurchflusses mit einer einzigen schwingfähigen Messrohrleitung, wobei die Messrohrleitung in ihrer Ruhelage in einer Rohrleitungsebene gebogen ist, wobei die Messrohrleitung eine zweizählige Rotationssymmetrie aufweist bezüglich einer Achse, die senkrecht zur Rohrleitungsebene verläuft. Gattungsgemäße Messaufnehmer sind beispielsweise beschrieben in der Offenlegungsschrift DE 039 16 285 A1, der Veröffentlichung EP 0 518 124 A1 sowie der noch unveröffentlichten Patentanmeldung DE 10 2015 122 146.2. Messaufnehmer mit einem einzigen Messrohr sind insofern vorteilhaft, als sie keine Strömungsteiler enthalten. Anders als bei Messaufnehmern mit zwei Messrohren, die symmetrisch gegeneinander schwingen, ist es jedoch bei Messaufnehmern mit nur einem einzigen Messrohr schwieriger eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden. Die Offenlegungsschrift DE 10 2010 030 340 A1 offenbart hierzu einen Messaufnehmer mit einem einzigen Messrohr, bei dem das Messrohr zwei parallel geführte Schleifen aufweist, die gegeneinander schwingen und sich insoweit gegenseitig balancieren. Für diesen Messaufnehmertyp ist jedoch aufgrund des Verlaufs der Messrohrleitung in Schleifen eine Entleerbarkeit des Messrohrs prinzipiell ausgeschlossen, während gattungsgemäße Messaufnehmer grundsätzlich entleerbar gestaltet sein können.

Als einen Beitrag, um eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden, beschreibt EP 0 518 124 A1 eine Frequenztrennung zwischen den Schwingungen der Messrohrleitung und Schwingungen anderer Komponenten des Messaufnehmers.

In Fertigungsanlagen können derartige Messaufnehmer auch in beschleunigten Bezugssystemen eingesetzt werden, beispielsweise in Abfüllanlagen bzw. im Zusammenhang mit Robotern. Hierbei hat sich gezeigt, dass solche Beschleunigungen den Calibrierfaktor des Messaufnehmers beeinflussen können und insoweit die Messung stören.

Es ist die Aufgabe der vorliegenden Erfindung, einen möglichst kompakten und dabei störunempfindlichen Messaufnehmer bereitzustellen. Die Aufgabe wird erfindungsgemäß gelöst durch den Messaufnehmer gemäß dem unabhängigen Patentanspruch 1.

Der erfindungsgemäße Messaufnehmer zum Messen des Massendurchflusses eines strömungsfähigen Mediums umfasst:
einen Leitungseinlaufabschnitt;
eine einzige schwingfähige Messrohrleitung zu Führen des Mediums, wobei die Messrohrleitung in ihrer Ruhelage in einer Rohrleitungsebene gebogen ist;
einen Leitungsauslaufabschnitt;
mindestens einen Schwingungserreger zum Anregen von Biegeschwingungen der Messrohrleitung in einer Biegeschwingungsnutzmode;
mindestens zwei Schwingungssensoren zum Erfassen von Schwingungen der Messrohrleitung;
ein Tragsystem mit einer Trägerplatte, mindestens einem einlaufseitigen Lagerkörper und mindestens einem auslaufseitigen Lagerkörper; und
ein Messaufnehmergehäuse;
wobei das Tragsystem Tragsystemschwingungsmoden aufweist, die elastische Verformungen der Trägerplatte umfassen;
wobei die Messrohrleitung mittels des einlaufseitigen Lagerkörpers und mittels des auslaufseitigen Lagerkörpers mit der Trägerplatte verbunden und durch die Lagerkörper begrenzt ist,
wobei die Messrohrleitung einlaufseitig an den Leitungseinlaufabschnitt und auslaufseitig an den Leitungsauslaufabschnitt anschließt und über letztere an eine Rohrleitung anschließbar ist, wobei der Leitungseinlaufabschnitt und der Leitungsauslaufabschnitt jeweils fest mit dem Messaufnehmergehäuse verbunden sind
wobei die Trägerplatte eine Anzahl von insbesondere spiralförmigen Federlagern aufweist, wobei ein Federlager jeweils durch mindestens einen Schnitt in der Trägerplatte freigelegt ist,
wobei die Trägerplatte über das oder die Federlager gegenüber dem Messaufnehmergehäuse federnd gelagert ist, so dass sie drei Translationsschwingungsfreiheitsgrade und drei Rotationsschwingungsfreiheitsgrade aufweist,
wobei die Eigenfrequenzen von Schwingungen der Trägerplatte gegenüber dem Messgerätgehäuse aufgrund der Translationsschwingungsfreiheitsgrade und der Rotationsschwingungsfreiheitsgrades geringer sind als eine Nutzmodeeigenfrequenz der Biegeschwingungsnutzmode,
wobei die Nutzmodeeigenfrequenz geringer ist als die Eigenfrequenzen von den Tragsystemschwingungsmoden,
wobei die Messrohrleitung eine zweizählige Rotationssymmetrie aufweist bezüglich einer Symmetrieachse, die senkrecht zur Rohrleitungsebene verläuft,
wobei die Schwingungssensoren so positioniert sind, dass eine Drehzahlabhängigkeit des Kalibrierfaktors Calf bei Rotationen des Messaufnehmers um eine Rotationsachse die senkrecht zur Symmetrieachse der zweizähligen Rotationssymmetrie und senkrecht zu einer Längsachse des Messaufnehmers verläuft, ein Minimum aufweist bzw. den Wert des Minimum um nicht mehr als 10% von dessen Wert übersteigt.

Es hat sich gezeigt dass Rotationen um diese Rotationsachse den größten Einfluss auf den Kalibrierfaktor haben. Eine Positionierung der Schwingungssensoren, die diesen Einfluss minimiert, trägt daher erheblich zur Leitungsfähigkeit des Messaufnehmers in beschleunigten Bezugssystemen bei.

In einer Weiterbildung der Erfindung sind die Lagerkörper so positioniert, dass die Nutzmodeeigenfrequenz einen Frequenzabstand zur nächsten Eigenfrequenz einer anderen Schwingungsmode der Messrohrleitung aufweist, der einen Frequenzabstandsgrenzwert nicht unterschreitet,
wobei der Frequenzabstandsgrenzwert mindestens 2% insbesondere mindestens 4% und bevorzugt mindestens 8% der Nutzmodeeigenfrequenz beträgt.

Beim erfindungsgemäßen Messaufnehmer wird also neben der Frequenztrennung zwischen den Schwingungsmoden der Messrohrleitung einerseits und den Tragsystemschwingungsmoden bzw. Schwingungen der Trägerplatte gegenüber dem Messaufnehmergehäuse andererseits, durch Anordnung die Positionierung der Lagerkörper erreicht, dass störende Schwingnungsmoden der Messrohrleitung sich allenfalls vernachlässigbar auf die Biegeschwingungsnutzmode auswirken.

Wenngleich die Biegeschwingungsnutzmode bevorzugt eine Schwingungsmode ist bei der die Messrohrleitung senkrecht zur Rohrleitungsebene schwingt, sind bei der Ermittlung der Frequenzabstände auch sämtliche Schwingungsmoden der Messrohrleitung beachtlich, also neben solchen mit Schwingungen senkrecht zur Rohrleitungsebene, auch solche mit Schwingungen in der Rohrleitungsebene.

Geeignete Positionen der Lagerkörper können beispielsweise durch positionsabhängige Ermittlung der Eigenfrequenzen von Schwingungsmoden der Messrohrleitung mittels FEM-Simulation bestimmt werden.

Die insbesondere spiralförmigen Federlager entkoppeln mit geringem Aufwand sämtliche Schwingungsmoden zwischen Messaufnehmergehäuse und Trägerplatte im Frequenzbereich der Biegeschwingungsnutzmode und zwar unabhängig von der Schwingungsrichtung. Hierin ist ein erheblicher Vorteil gegenüber Kragträgerfedern gegeben, wie sie in WO 2015/076 676 A1 offenbart sind. Derartige Kragträgerfedern erlauben nämlich nur Auslenkungen senkrecht zur Ebene der Trägerplatte. Schwingungen in der Plattenebene können daher durch solche Kragträger nicht entkoppelt werden.

In einer Weiterbildung der Erfindung beschreibt ein Kalibrierfaktor (Calf) in erster Näherung eine Proportionalität zwischen einem Massedurchfluss durch die Messrohrleitung und einer Phasendifferenz zwischen Schwingungen der in der Biegeschwingungsnutzmode schwingenden Messrohrleitung am Ort der beiden Schwingungssensoren, wobei eine Bewertungsfunktion, die proportional zum Frequenzabstand und umgekehrt proportional zur Nutzmodeeigenfrequenz und zum Kalibrierfaktors Calf ist, ein lokales oder insbesondere absolutes Maximum aufweist, wobei die Lagerkörper so positioniert sind, das die Bewertungsfunktion den Wert des Maximums um nicht mehr als 8%, insbesondere nicht mehr als 4% und bevorzugt nicht mehr als 2% unterschreitet. Der von der Lagerkörperposition abhängige Kalibrierfaktor Calf kann beispielsweise FEM-Simulation ermittelt werden.

Diese Bewertungsfunktion ermöglicht eine balancierte Berücksichtigung von Robustheit gegen störende Schwingungen einerseits und großer Messempfindlichkeit andererseits beim Entwurf des Messaufnehmers. Dies ist gerade im Hinblick auf einen kompakten Sensorentwurf beachtlich zu dem weiter unten noch weitere Gesichtspunkte genannt sind.

In einer Weiterbildung der Erfindung ist die Biegeschwingungsnutzmode, eine F3-Biegeschwingungsmode, in welcher die Messrohrleitung senkrecht zur Rohrleitungsebene schwingt. Bei dieser Schwingungsmode ist das Integral der Beschleunigung entlang der Messrohrleitung minimal. Insofern als die F3-Biegeschwingungsmode auch die zweizähligen Symmetrie der Messrohrleitung aufweist, verbleiben in Summe auch keine Drehmomente an den Lagerkörpern. Im Ergebnis können daher allenfalls vernachlässigbare Anteile der Vibrationsenergie über die Lagerblöcke dissipiert werden. Entsprechend ist die F3-Biegeschwingungsmode auch kaum über externe Vibrationen zu stören.

In einer Weiterbildung der Erfindung betragen die Eigenfrequenzen von Schwingungen der Trägerplatte gegenüber dem Messgerätgehäuse aufgrund der Translationsschwingungsfreiheitsgrade und der Rotationsschwingungsfreiheitsgrade höchstens die Hälfte der Nutzmodeeigenfrequenz des Biegeschwingungsnutzmodes, wobei die Tragsystem-Eigenfrequenz mindestens das Doppelte die Nutzmodeeigenfrequenz beträgt.

In einer Weiterbildung der Erfindung ist die Anzahl der Federlager 1, 2, 3, oder 4. Die Ausgestaltung mit vier Federlagern ist derzeit bevorzugt, da auf diese Weise eine der zweizähligen Rotationssymmetrie der Messrohrleitung entsprechende Lagerung der Trägerplatte einfach zu realisieren ist, indem die Federn entsprechend angeordnet werden. Grundsätzlich ist die auch mit nur zwei Federn möglich, jedoch wirken sich in diesem Fall Fertigungstoleranzen beim Freilegen der Federn in der Trägerplatte stärker aus.

In einer Weiterbildung der Erfindung weist die Messrohrleitung einen S-förmigen Verlauf auf, wobei in der Rohrleitungsebene eine Längsrichtung (z) existiert, zu welcher die Rohrleitungsachse an keinem Punkt einen Winkel von mehr als 85°, insbesondere nicht mehr als 83° aufweist. Insbesondere mit einer vertikalen Orientierung der Längsrichtung ist damit die Entleerbarkeit der Messrohrleitung gewährleistet.

In einer Weiterbildung der Erfindung weist die Messrohrleitung zwischen den beiden Lagerkörpern zwei äußere gerade Abschnitte und einen zentralen geraden Abschnitt auf, die durch zwei (kreis-)bogenförmige Abschnitte verbunden sind, wobei die beiden Lagerkörper jeweils an den äußeren geraden Abschnitten angeordnet sind.

Durch den zentralen geraden Abschnitt verläuft die Achse der zweizähligen Rotationssymmetrie. An die äußeren geraden Abschnitte schließen der Leitungseinlaufabschnitt bzw. der Leitungsauslaufabschnitt an.

Durch die Anordnung der Lagerkörper an den äußeren geraden Abschnitten wird in Abweichung zu den Messaufnehmern nach dem Stand der Technik ein in Längsrichtung besonders kompakter Aufbau realisiert. Insofern als dies tendenziell zu einer erhöhten Steifigkeit der Messrohrleitung bezüglich des dem Biegeschwingungsnutzmode überlagerten Coriolis-Mode führt, bewirkt dies zunächst einen höheren Kalibrierfaktor (Calf). Hier kommt jedoch die weiter oben genannte Bewertungsfunktion zum Tragen, mit welcher diese nachteilige Konsequenz der kompakten Bauweise zumindest teilweise ausgeglichen werden kann.

In einer Weiterbildung der Erfindung verläuft jeweils eine Winkelhalbierende zwischen Rohrmittelachsen des zentralen geraden Abschnitt und eines der äußeren geraden Abschnitte, wobei die Schwingungssensoren jeweils zwischen einem Schnittpunkt einer der Winkelhalbierenden mit der Messohrleitung und einem Punkt auf dem äußeren geraden Abschnitt der Messrohrleitung, der einen Krümmungsradius des kreisförmigen Abschnitts, insbesondere einen halben Krümmngsradius, vorzugsweise einen viertel Krümmungsradius, vom Übergang des kreisförmigen Abschnitts zum äußeren geraden Abschnitt entfernt ist, an der Messrohrleitung montiert sind. des kreisbogenförmigen Abschnitts vom Übergang des kreisbogenförmigen Abschnitts zum äußeren geraden Abschnitt entfernt ist, an der Messrohrleitung montiert sind.

Mit der Sensormontage auf dem äußeren geraden Abschnitt am Übergang zwischen dem gebogenen Abschnitt und dem äußeren geraden Abschnitt bzw. nahe daran, wird die Minimierung der Rotationsabhängigkeit des Kalibrierfaktors Calf erreicht.

In einer Weiterbildung der Erfindung tragen der Leitungseinlaufabschnitt und der Leitungsauslaufabschnitt, bezüglich der Translationsschwingungsfreiheitsgrade und der Rotationsschwingungsfreiheitsgrade der Trägerplatte gegenüber dem Messaufnehmergehäuse ergänzend zu der Feder bzw. Federn zu einer jeweils freiheitsgradspezifischen Richtgröße bei, wobei ein Beitrag des Leitungseinlaufabschnitts von einem entsprechenden Beitrag des Leitungsauslaufabschnitts jeweils nicht mehr als 10%, und insbesondere nicht mehr 5% des jeweils kleineren Beitrags abweicht.

In einer Weiterbildung der Erfindung beträgt der gemeinsame Beitrag des Leitungseinlaufabschnitts und des Leitungsauslaufabschnitts zu keiner der freiheitsgradspezifischen Richtgrößen mehr als 40%, insbesondere nicht mehr als 20% und bevorzugt nicht mehr als 10%.

In einer Weiterbildung der Erfindung weisen der Leitungseinlaufabschnitt und der Leitungsauslaufabschnitt im Wesentlichen den gleichen Rohrquerschnitt auf wie die Mess, insbesondere das gleiche Rohrmaterial wie die Messrohrleitung und sind bevorzugt einstückig mit der Messrohrleitung gefertigt.

In einer Weiterbildung der Erfindung betragen die Eigenfrequenzen der Translationsschwingungsfreiheitsgrade und Rotationsschwingungsfreiheitsgrade der Trägerplatte nicht weniger als 70 Hz, insbesondere nicht weniger als 100 Hz, und/oder nicht mehr als 400 Hz. Hierdurch wird gewährleistet, dass typische störende Vibrationen von technischen Anlagen, die Trägerplatte nicht zum Schwingen anregen können.

In einer Weiterbildung der Erfindung verläuft jeweils eine Winkelhalbierende (w1, w2) zwischen einer Rohrmittelachse des zentralen geraden Abschnitts und einer Rohrmittelachse eines der äußeren geraden Abschnitte, wobei ein Koordinatensystem mit einer z-Achse in der Rohrleitungsebene gegeben ist, die senkrecht zu den Winkelhalbierenden (w1, w2) verläuft, wobei die Achse der zweizähligen Rotationssymmetrie die x-Achse bildet, wobei eine durch die x-Achse und die z-Achse aufgespannte y-z-Ebene, die äußeren geraden Abschnitte beabstandet zu den Lagerkörpern schneidet.

In einer Weiterbildung der Erfindung ist der Schwingungserreger im Zentrum der zweizähligen Rotationssymmetrie angeordnet, und wobei der Schwingungserreger dazu eingerichtet ist Biegeschwingungen senkrecht zur Rohrleitungsebene anzuregen.

In einer Weiterbildung der Erfindung verläuft jeweils eine Winkelhalbierende zwischen einer Rohrmittelachse des zentralen geraden Abschnitts und einer Rohrmittelachse eines der äußeren geraden Abschnitte, wobei ein Koordinatensystem mit einer z-Achse in der Rohrleitungsebene gegeben ist, die senkrecht zu den Winkelhalbierenden verläuft, wobei Achse der zweizähligen Rotationssymmetrie die x-Achse bildet, wobei die y-Achse die parallel zu den Winkelhalbierenden durch den Schnittpunkt von x-Achse und z-Achse verläuft, wobei eine charakteristische Basisfläche der Messrohrleitung durch ein Rechteck definiert ist, dessen Seiten einerseits in z-Richtung durch jeweils einen Schnittpunkt einer der Winkelhalbierenden mit der Rohrachse eines gebogenen Abschnitts und andererseits in y-Richtung durch jeweils einen Schnittpunkt eines der Lagerkörper mit der Rohrachse der Messrohrleitung verlaufen, wobei das Verhältnis der Rechteckfläche zum Innendurchmesser der Messrohrleitung nicht mehr als 8000, insbesondere nicht mehr als 6000, und bevorzugt nicht mehr als 5000 beträgt.

In einer Weiterbildung der Erfindung beträgt der Innendurchmesser der Messrohrleitung nicht mehr als 5 mm.

Die Erfindung wird nun anhand der in den Zeichnungen dargestellten Ausführungsbeispiele erläutert. Es zeigt:
Fig. 1a: Eine Aufsicht auf ein Ausführungsbeispiel eines erfindungsgemäßen Messaufnehmers;
Fig. 1b: Eine räumliche darstellung eines Ausführungsbeispiel eines erfindungsgemäßen Messaufnehmers;
Fig. 2a: Ein Diagramm zur Abhängigkeit des Kalibrierfaktors von der Drehzahl, in Abhängigkeit von der Sensorposition;
Fig. 2b: Ein Diagramm zu Aspekten einer Bewertungsfunktion zur Positionierung von Lagerkörpern;
Fig 3: Eine Detailansicht eines Federlagers eines erfindungsgemäßen Messaufnehmers; und
Fig. 4: Eine Detailansicht eines Ein- bzw. Auslaufabschnitts eines Ausführungsbeispiels eines erfindungsgemäßen Messaufnehmers.

Der Messaufnehmer 100 umfasst eine Messrohrleitung 10 mit einem ersten geraden äußeren Abschnitt 11 einem zweiten geraden äußeren Abschnitt 12 und einen zentralen geraden Abschnitt 13 sowie einen ersten gebogenen Abschnitt 15 und einen zweiten gebogenen Abschnitt 16. Die beiden geraden äußeren Abschnitte 15, 16 sind jeweils mittels eines der gebogenen Abschnitte 15, 16 mit dem zentralen geraden Abschnitt 13 verbunden. Die Messrohrleitung 10 ist durch zwei Lagerkörper 21, 22 begrenzt, und mit letzteren an einer biegesteifen Trägeplatte 30 befestigt. Die Messrohrleitung 10 verläuft im Wesentlichen in einer zur Trägerplatte 30 parallelen Rohrleitungsebene. Die Messrohrleitung weist eine zweizählige Rotationssymmetrie um eine Symmetrieachse auf, die senkrecht zur Rohrleitungsebene durch einen Punkt C2 in der Mitte des zentralen Rohrleitungsabschnitts verläuft. Die Messrohrleitung hat einen Innendurchmesser von beispielsweise 5 mm oder weniger. Es ist aus einem Metall, insbesondere Edelstahl oder Titan gefertigt. Die metallische Trägerplatte 30 weist eine Stärke von beispielsweise 5 mm auf. Die Trägerplatte 30 weist vier spiralförmige Federlager 31, 32, 32, 33, 34 auf, die insbesondere mittels eines Lasers freigeschnitten sind, und die zueinander ebenfalls die zweizählige Rotationssymmetrie bezüglich der Symmetrieachse durch den Punkt C2 aufweisen. Mit hier nicht dargestellten Lagerbolzen, die im Zentrum der Federlager fixiert sind, ist Die Trägerplatte 30 an einer Gehäuseplatte 40 eines Messaufnehmergehäuses verankert.

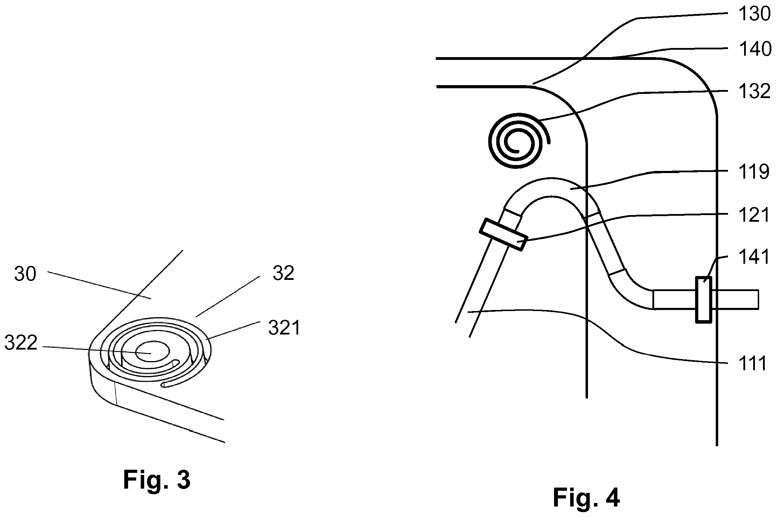

Ein Federlager 32 ist detaillierter in Fig. 3 dargestellt. Die effektive Steifigkeit des Federlagers 32 ergibt sich aus der Länge des spiralförmigen Einschnitts 321 sowie seiner Breite im Verhältnis zur Breite des verbleibenden Materials der Trägerplatte 30. Im Zentrum weist das Federlager 32 eine Bohrung 322 zur Aufnahme eines Lagerbolzens auf.

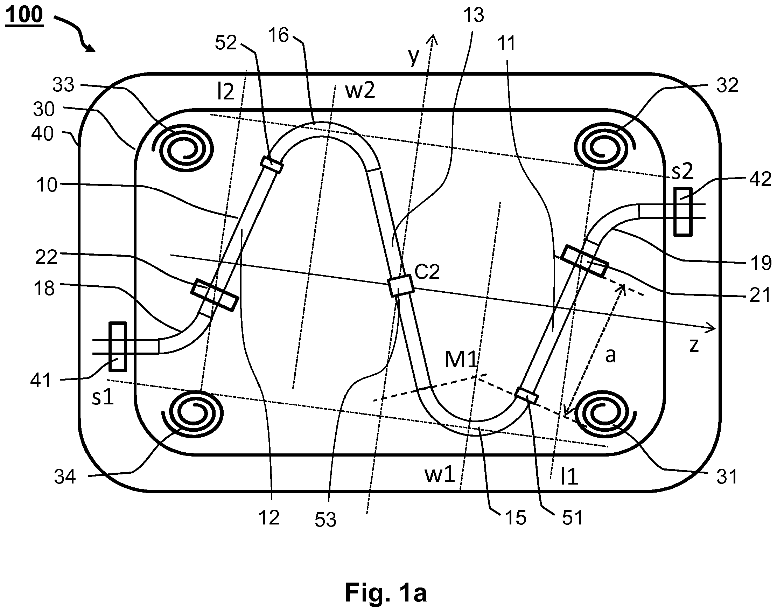

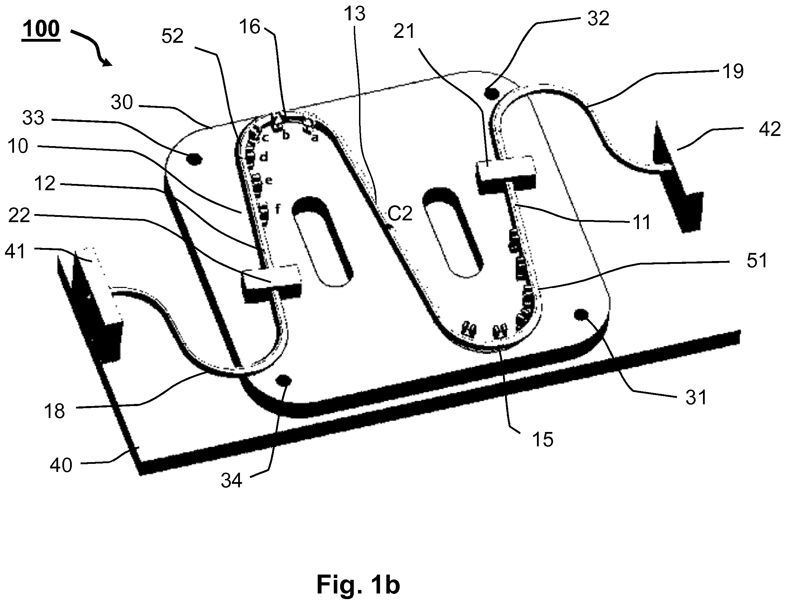

Durch die Federlager 31, 32, 33, 34 weist die Trägerplatte 30 drei Translationsschwingungsfreiheitsgrade und drei Rotationsschwingungsfreiheitsgrade auf, deren Eigenfrequenzen mindestens 70 Hz betragen, um Resonanzschwingungen mit häufig in Prozessanlagen vorkommenden Vibrationen von bis zu 50 Hz zu vermeiden. Um die durch die Federlager 31, 32, 33, 34 erreichte weiche Aufhängung der Trägerplatte nicht zu beeinträchtigen, ist die Messrohrleitung über einen hinreichend weichen Leitungseinlaufabschnitt 18 und einen hinreichend weichen Leitungsauslaufabschnitt 19 an eine Rohrleitung anschließbar. Das Gehäuse weist einen erstes und zweites Gehäuselager 41, 42 auf, die fest mit der Gehäuseplatte 40 verbunden sind, und an denen der Leitungseinlaufabschnitt 18 und der Leitungsauslaufabschnitt 19 fixiert sind, um eine Übertragung von Schwingungen der Rohrleitung auf die Messrohrleitung über den Leitungseinlaufabschnitt 18 und den Leitungsauslaufabschnitt 19 zu unterdrücken. Die Translations- und Rotationsschwingungsfreiheitsgrade der Trägerplatte 20 haben jeweils Eigenfrequenzen fᵢ, die proportional sind zur Wurzel aus einem Quotienten aus einer Richtgröße kᵢ und einem Trägheitsterm mᵢ, also fᵢ α (kᵢ/mᵢ)^{1/2}. Der Leitungseinlaufabschnitt 18 und der Leitungsauslaufabschnitt tragen in Summe nicht mehr als 10% zur jeweiligen Richtgröße kᵢ bei. In Fig.1 sind der der Leitungseinlaufabschnitt 18 und der Leitungsauslaufabschnitt 19 im Wesentlichen schematisch dargestellt. Fig. 4 zeigt eine Gestaltung eines Leitungsauslaufabschnitts 119, bei dem durch zusätzliche Rohrlänge und Bögen die Steifigkeit und damit der Beitrag zu den jeweiligen Richtgrößen reduziert ist. Der Leitungseinlaufabschnitt ist entsprechend symmetrisch dazu gestaltet.

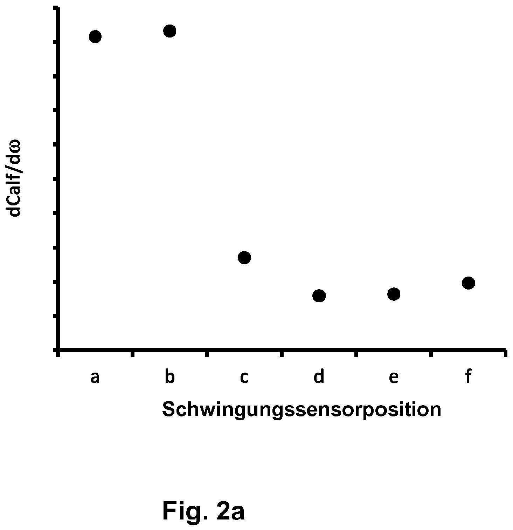

Wie weiter in Fign. 1a und 1b dargestellt, weist der Messaufnehmer 100 zum Erfassen der Schwingungen der Messrohrleitung einen ersten elektrodynamischen Schwingungssensor 51 und einen zweiten elektrodynamischen Schwingungssensor 52 auf. Zur Ermittlung der optimalen Sensorposition wurde die Drehzahlabhängigkeit des Kalibrierfaktors Calf bei Rotationen um die in Fig. 1a dargestellte y-Achse für verschiedene Schwingungssensorpositionen betrachtet, die in Fig 1b mit a bis f gekennzeichnet sind. Die Betrachtung erfolgte mit numerischer Simulation. Die Ergebnisse dazu sind in Fig. 2a dargestellt. Demnach ergab sich bei der Positin d am Übergang zwischen dem gebogenen Abschnitt zum äußeren Geraden Abschnitt eine minimale Abhängigkeit, also ein Optimum. An diesem Übergang unmittelbar angrenzend sind die Schwingungssensoren 51, 52 sind hier jeweils auf einem der beiden geraden äußeren Abschnitte 11, 12 angeordnet. Die mit der Messrohrleitung schwingenden Teile der Schwingungssensoren weisen zudem eine Hauptträgheitsachse auf die mit der Rohrleitungsachse am Ort ihrer Montage fluchtet.

Zum Anregen von Biegeschwingungen weist der Messaufnehmer einen elektrodynamischen Erreger 53 auf, der im Zentrum C2 der zweizähligen Rotationssymmetrie angeordnet ist und in Richtung der Symmetrieachse wirkt.

Das Zentrum C2 ist Ursprung eines Koordinatensystems zur Beschreibung weiterer Gesichtspunkte der Erfindung. Die Messrohrleitung liegt in einer y-z-Ebene, wobei die y-Achse parallel zu Winkelhalbierenden w1, w2 verläuft, die jeweils zwischen einer Rohrachse der geraden äußeren Abschnitte 11, 12 und der Rohrachse des zentralen geraden Abschnitts 13 verlaufen. Die z-Achse verläuft senkrecht zur y-Achse in der Rohrleitungsebene und definiert eine Längsachse des Messaufnehmers 100. Wenn diese Längsachse senkrecht angeordnet ist, ist der Messaufnehmer optimal entleerbar. Die Neigung der geraden Abschnitte ist dann gleich dem halben Winkel zwischen zwischen einer Rohrachse der geraden äußeren Abschnitte 11, 12 und der Rohrachse des zentralen geraden Abschnitts 13. Beim bevorzugten Ausführungsbeispiel der Erfindung beträgt diese Neigung 7°.

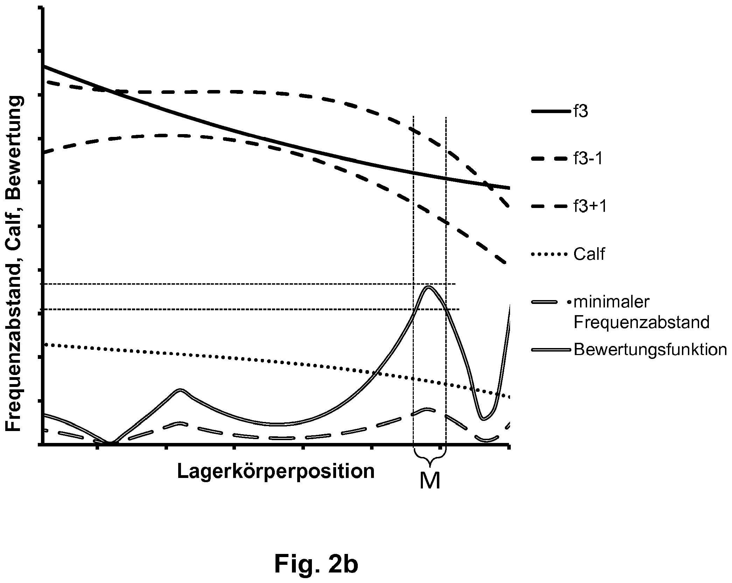

Zur Positionierung der Lagerkörper 21, 22 wird nun auf Fig. 2b verwiesen, welche eine Bewertungsfunktion und deren Komponenten darstellt. Zum Aufstellen der Bewertungsfunktion werden zunächst die Eigenfrequenzen von Schwingungsmoden der Messrohrleitung für verschiedene Lagerkörperpositionen mittels numerischer Simulation ermittelt. Das Ergebnis ist hier für den Biegeschwingungsnutzmode F3 und die hinsichtlich der Eigenfrequenzen benachbarten Biegeschwingungsmoden F3-1 und F3+1 dargestellt. Weiterhin wird ein Kalibrirfaktor Calf := (dm/dt)/dϕ für die verschiedene Lagerkörperpositionen mittels numerischer Simulation ermittelt, welcher den Zusammenhang zwischen einer Massedurchflussrate und einer durchflussabhängigen Phasendifferenz zwischen den Sensorsignalen der Schwingungssensoren beschreibt. Die Bewertungsfunktion wird dann als Quotient aus dem minimalen Frequenzabstand zwischen der Biegeschwingungsnutzmode zu einer benachbarten Schwingungsmode und dem Kalibrierfaktor Calf berechnet. Eine Optimalposition der Lagerkörper, bei der die Bewertungsfunktion ein Maximum aufweist, ist dient zur Orientierung für die tatsächliche Positionierung des Lagerkörpers. Es kann von der Optimalposition abgewichen werden, wenn dadurch der Wert der Bewertungsfunktion um nicht mehr als 2% unterschritten wird. Im dargestellten Ausführungsbeispiel ist die Position der Lagerkörper 21, 22 mittels der Bewertungsfunktion so festgelegt, dass die z-Achse der Messrohrleitung die äußeren geraden Abschnitte 11, 12 der Messrohrleitung beabstandet zu den Lagerkörpern 21, 22 schneidet. Im Ergebnis wurde ein störunempfindlicher Messaufnehmer mit einer kompakt geführten Messrohrleitung realisiert, der auch durch beschleunigte Bezugssysteme nicht zu stören ist.

## Patentansprüche

1. Vibronischer Messaufnehmer (100) zum Messen des Massendurchflusses eines strömungsfähigen Mediums, umfassend:
einen Leitungseinlaufabschnitt (18);
eine schwingfähige Messrohrleitung (10) zu Führen des Mediums, wobei die Messrohrleitung in ihrer Ruhelage in einer Rohrleitungsebene gebogen ist;
einen Leitungsauslaufabschnitt (19);
mindestens einen Schwingungserreger (53) zum Anregen von Biegeschwingungen der Messrohrleitung (10) in einer Biegeschwingungsnutzmode;
mindestens zwei Schwingungssensoren zum Erfassen von Schwingungen der Messrohrleitung;
ein Tragsystem mit einer Trägerplatte (30), mindestens einem einlaufseitigen Lagerkörper (21) und mindestens einem auslaufseitigen Lagerkörper (22); und
ein Messaufnehmergehäuse;
wobei das Tragsystem Tragsystemschwingungsmoden aufweist, die elastische Verformungen der Trägerplatte (30) umfassen;
wobei die Messrohrleitung (10) mittels des einlaufseitigen Lagerkörpers (21) und mittels des auslaufseitigen Lagerkörpers (22) mit der Trägerplatte (30) fest verbunden und durch die Lagerkörper begrenzt ist,
wobei die Messrohrleitung (10) einlaufseitig an den Leitungseinlaufabschnitt (18) und auslaufseitig an den Leitungsauslaufabschnitt (19) anschließt und über letztere an eine Rohrleitung anschließbar ist,
wobei der Leitungseinlaufabschnitt (18) und der Leitungsauslaufabschnitt (19) jeweils fest mit dem Messaufnehmergehäuse (40) verbunden sind;
wobei die Trägerplatte über das oder die Federlager gegenüber dem Messaufnehmergehäuse federnd gelagert ist, so dass sie drei Translationsschwingungsfreiheitsgrade und drei Rotationsschwingungsfreiheitsgrade aufweist,
wobei die Eigenfrequenzen von Schwingungen der Trägerplatte gegenüber dem Messgerätgehäuse aufgrund der Translationsschwingungsfreiheitsgrade und der Rotationsschwingungsfreiheitsgrades geringer sind als eine Nutzmodeeigenfrequenz des Biegeschwingungsnutzmodes,
wobei die Nutzmodeeigenfrequenz geringer ist als die Eigenfrequenzen der Tragsystemschwingungsmoden,
wobei die wobei die Messrohrleitung im Wesentlichen eine zweizählige Rotationssymmetrie aufweist bezüglich einer Achse die senkrecht zur Rohrleitungsebene verläuft,
wobei ein Kalibrierfaktor (Calf) in erster Näherung eine Proportionalität zwischen einem Massedurchfluss durch die Messrohrleitung und einer Phasendifferenz zwischen Schwingungen der im Biegeschwingungsnutzmode schwingenden Messrohrleitung am Ort der beiden Schwingungssensoren beschreibt,
**dadurch gekennzeichnet, dass**
die Trägerplatte (30) eine Anzahl von insbesondere spiralförmigen Federlagern (31, 32, 33, 34) aufweist, wobei ein Federlager jeweils durch mindestens einen Schnitt in der Trägerplatte freigelegt ist,
die Schwingungssensoren so positioniert sind, dass eine Drehzahlabhängigkeit des Kalibrierfaktors (Calf) bei Rotationen des Messaufnehmers um eine Rotationsachse die senkrecht zur Symmetrieachse der zweizähligen Rotationssymmetrie und senkrecht zu einer Längsachse des Messaufnehmers verläuft, den Wert eines Minimums der Drehzahlabhängigkeit um nicht mehr als 10% von dessen Wert übersteigt.

2. Messaufnehmer nach Anspruch 1, wobei die Lagerkörper (21, 22) so positioniert sind, dass die Nutzmodeeigenfrequenz einen Frequenzabstand zur nächsten Eigenfrequenz einer anderen Schwingungsmode der Messrohrleitung aufweist, der einen Frequenzabstandsgrenzwert nicht unterschreitet, wobei der Frequenzabstandsgrenzwert mindestens 2% insbesondere mindestens 4% und bevorzugt mindestens 8% der Nutzmodeeigenfrequenz beträgt.

3. Messaufnehmer nach Anspruch 1, wobei ein Kalibrierfaktor (Calf) in erster Näherung eine Proportionalität zwischen einem Massedurchfluss durch die Messrohrleitung und einer Phasendifferenz zwischen Schwingungen der im Biegeschwingungsnutzmode schwingenden Messrohrleitung am Ort der beiden Schwingungssensoren beschreibt, wobei eine Bewertungsfunktion die, proportional zum Frequenzabstand und umgekehrt proportional zur Nutzmodeeigenfrequenz und zum Kalibrierfaktors Calf ist, ein lokales oder absolutes Maximum aufweist, wobei die Lagerkörper so positioniert sind, das die Bewertungsfunktion den Wert des Maximums um nicht mehr als 8%, insbesondere nicht mehr als 4% und bevorzugt nicht mehr als 2% unterschreitet.

4. Messaufnehmer nach einem der vorhergehenden Ansprüche, wobei der Nutzmode, eine F3-Biegeschwingungsmode ist.

5. Messaufnehmer nach einem der vorhergehenden Ansprüche, wobei die Eigenfrequenzen von Schwingungen der Trägerplatte gegenüber dem Messgerätgehäuse aufgrund der Translationsschwingungsfreiheitsgrade und der Rotationsschwingungsfreiheitsgrade höchstens die Hälfte der Nutzmodeeigenfrequenz des Biegeschwingungsnutzmodes beträgt, und wobei die Tragsystem-Eigenfrequenz mindestens das Doppelte die Nutzmodeeigenfrequenz beträgt.

6. Messaufnehmer nach einem der vorhergehenden Ansprüche, wobei die Messrohrleitung einen S-förmigen Verlauf aufweist, wobei in der Rohrleitungsebene eine Längsrichtung (z) existiert, zu welcher die Rohrleitungsachse an keinem Punkt einen Winkel von mehr als 85°, insbesondere nicht mehr als 83° aufweist.

7. Messaufnehmer nach Anspruch 6, wobei die Messrohrleitung (10) zwischen den beiden Lagerkörpern (21, 22) zwei äußere gerade Abschnitte (11, 12) und einen zentralen geraden Abschnitt (13) aufweist, die durch zwei kreisbogenförmige Abschnitte (15, 16) verbunden sind, wobei die beiden Lagerkörper (21, 22) jeweils an den äußeren geraden Abschnitten angeordnet sind.

8. Messaufnehmer nach Anspruch einem der vorhergehenden Ansprüche, wobei jeweils eine Winkelhalbierende (w1, w2) zwischen Rohrmittelachsen des zentralen geraden Abschnitts (13) und eines der äußeren geraden Abschnitte (11, 12) verläuft, wobei die Schwingungssensoren jeweils zwischen einem Schnittpunkt einer der Winkelhalbierenden mit der Messohrleitung und einem Punkt auf dem äußeren geraden Abschnitt der Messrohrleitung, der einen Krümmungsradius des kreisförmigen Abschnitts, insbesondere einen halben Krümmungsradius, vorzugsweise einen viertel Krümmungsradius, vom Übergang des kreisförmigen Abschnitts zum äußeren geraden Abschnitt entfernt ist, an der Messrohrleitung montiert sind.

9. Messaufnehmer nach einem der vorhergehenden Ansprüche, wobei der Leitungseinlaufabschnitt und der Leitungsauslaufabschnitt, bezüglich der Translationsschwingungsfreiheitsgrade und der Rotationsschwingungsfreiheitsgrade der Trägerplatte gegenüber dem Messaufnehmergehäuse ergänzend zu der Feder bzw. Federn zu einer jeweils freiheitsgradspezifischen Richtgröße beitragen, wobei ein Beitrag des Leitungseinlaufabschnitts von einem entsprechenden Beitrag des Leitungsauslaufabschnitts jeweils nicht mehr als 10%, jeweils kleineren Beitrags abweicht, wobei der gemeinsame Beitrag des Leitungseinlaufabschnitts und des Leitungsauslaufabschnitts zu den freiheitsgradspezifischen Richtgrößen nicht mehr als 10% beträgt.

10. Messaufnehmer nach einem der vorhergehenden Ansprüche, wobei der Leitungseinlaufabschnitt und der Leitungsauslaufabschnitt im Wesentlichen den gleichen Rohrquerschnitt aufweisen wie die Messrohrleitung, das gleiche Rohrmaterial wie die Messrohrleitung, und einstückig mit der Messrohrleitung gefertigt sind.

11. Messaufnehmer nach einem der vorhergehenden Ansprüche wobei die Eigenfrequenzen der Translationsschwingungsfreiheitsgrade und Rotationsschwingungsfreiheitsgrade der Trägerplatte nicht weniger als 70 Hz insbesondere nicht weniger als 100 Hz und/oder nicht mehr als 400 Hz betragen.

12. Messaufnehmer nach Anspruch 7 oder einem davon abhängigen Anspruch, wobei jeweils eine Winkelhalbierende (w1, w2) zwischen einer Rohrmittelachse des zentralen geraden Abschnitts (13) und einer Rohrmittelachse eines der äußeren geraden Abschnitte (11, 12) verläuft, wobei ein Koordinatensystem mit einer z-Achse in der Rohrleitungsebene gegeben ist, die senkrecht zu den Winkelhalbierenden (w1, w2) verläuft, wobei die Achse der zweizähligen Rotationssymmetrie die x-Achse bildet, wobei eine durch die x-Achse und die z-Achse aufgespannte x-z-Ebene, die äußeren geraden Abschnitte beabstandet zu den Lagerkörpern schneidet.

13. Messaufnehmer nach einem der vorhergehenden Ansprüche, wobei der Schwingungserreger im Zentrum der zweizähligen Rotationssymmetrie angeordnet ist, und wobei der Schwingungserreger dazu eingerichtet ist Biegeschwingungen senkrecht zur Rohrleitungsebene anzuregen.

14. Messaufnehmer nach Anspruch 7, oder einem davon abhängigen Anspruch, wobei, jeweils eine Winkelhalbierende (w1, w2) zwischen einer Rohrmittelachse des zentralen geraden Abschnitts (13) und einer Rohrmittelachse eines der äußeren geraden Abschnitte (11, 12) verläuft, wobei ein Koordinatensystem mit einer z-Achse in der Rohrleitungsebene gegeben ist, die senkrecht zu den Winkelhalbierenden (w1, w2) verläuft, wobei Achse der zweizähligen Rotationssymmetrie die x-Achse bildet, wobei die y-Achse die parallel zu den Winkelhalbierenden durch den Schnittpunkt von x-Achse und z-Achse verläuft, wobei eine charakteristische Basisfläche der Messrohrleitung durch ein Rechteck definiert ist, dessen Seiten einerseits in z-Richtung durch jeweils einen Schnittpunkt einer der Winkelhalbierenden mit der Rohrachse eines gebogenen Abschnitts und andererseits in y-Richtung durch jeweils einen Schnittpunkt eines der Lagerkörper mit der Rohrachse der Messrohrleitung verlaufen, wobei das Verhältnis der Rechteckfläche zum Innendurchmesser der Messrohrleitung nicht mehr als 8000, insbesondere nicht mehr als 6000, und bevorzugt nicht mehr als 5000 beträgt.

15. Messaufnehmer nach einem der vorhergehenden Ansprüche, wobei der Innendurchmesser der Messrohrleitung nicht mehr als 5 mm beträgt.

## Claims

1. Vibronic sensor (100) designed to measure the mass flow of a medium that can flow, said sensor comprising:
a pipe inlet section (18);
a measuring pipe, which can oscillate, (10) and is designed to conduct the medium, wherein the measuring pipe is curved in its rest position in a pipe plane;
a pipe outlet section (19);
at least a vibration exciter (53) designed to excite flexural vibrations of the measuring pipe (10) in a flexural vibration useful mode;
at least two vibration sensors designed to measure vibrations of the measuring pipe;
a support system with a support plate (30), at least a bearing body on the inlet side (21) and at least a bearing body on the outlet side (22); and
a sensor housing;
wherein the support system has support system vibration modes that comprise elastic deformations of the support plate (30);
wherein the measuring pipe (10) is connected in a fixed manner to the support plate (30) by means of the bearing body on the inlet side (21) and by means of the bearing body on the outlet side(22) and is limited by the bearing bodies,
wherein measuring pipe (10) is connected on the inlet side to the pipe inlet section (18) and on the outlet side to the pipe outlet section (19) and can be connected to a pipe by the latter,
wherein the pipe inlet section (18) and the pipe outlet section (19) are each connected in a fixed manner to the sensor housing (40);
wherein the support plate is spring-mounted in relation to the sensor housing via the spring bearing(s), such that it has three translational vibrational degrees of freedom and three rotational vibrational degrees of freedom,
wherein the natural frequencies of vibrations of the support plate in relation to the measuring device housing are less than a useful mode natural frequency of the flexural vibration useful mode due to the translational vibrational degrees of freedom and the rotational vibrational degrees of freedom,
wherein the useful mode natural frequency is less than the natural frequencies of the support system vibration modes,
wherein the measuring pipe essentially has a two-fold rotational symmetry in relation to an axis that is perpendicular to the pipe plane,
wherein, in a first approximation, a calibration factor (Calf) describes a proportionality between a mass flow through the measuring pipe and a phase difference between vibrations of the measuring pipe vibrating in the flexural vibration useful mode at the place of the two vibration sensors,
**characterized in that**
the support plate (30) has a number of spring bearings (31, 32, 33, 34), particularly spiral, wherein a spring bearing is exposed by at least a cut in the support plate,
the vibration sensors are positioned in such a way that, in the event of sensor rotations around an axis of rotation that is perpendicular to the axis of symmetry of the two-fold rotational symmetry and perpendicular to a longitudinal axis of the measuring sensor, a speed dependence of the calibration factor (Calf) does not exceed the value of a minimum of the speed dependence by more than 10% of its value.

2. Sensor as claimed in Claim 1, wherein the bearing bodies (21, 22) are positioned in such a way that the useful mode natural frequency has a frequency distance in relation to the next natural frequency of another vibration mode of the measuring pipe that does not drop below a frequency distance limit value, wherein the frequency distance limit value is at least 2%, particularly at least 4% and preferably at least 8% of the useful mode natural frequency.

3. Sensor as claimed in Claim 1, wherein, in a first approximation, a calibration factor (Calf) describes a proportionality between a mass flow through the measuring pipe and a phase difference between vibrations of the measuring pipe vibrating in the flexural vibration useful mode at the place of the two vibration sensors, wherein an evaluation function, which is proportional to the frequency distance and inversely proportional to the useful mode natural frequency and to the calibration factor Calf, has a local or absolute maximum, wherein the bearing bodies are positioned in such a way that the evaluation function does not drop below the value of the maximum by more than 8%, particularly by not more than 4% and preferably by not more than 2%.

4. Sensor as claimed in one of the previous claims, wherein the useful mode is an F3 flexural vibration mode.

5. Sensor as claimed in one of the previous claims, wherein the natural frequencies of vibrations of the support plate in relation to the measuring device housing due to translational vibrational degrees of freedom and rotational vibrational degrees of freedom are at most half the useful mode natural frequency of the flexural vibration useful mode, and wherein the support system natural frequency is at least double the useful mode natural frequency.

6. Sensor as claimed in one of the previous claims, wherein the measuring pipe has an S-shape, wherein a longitudinal direction (z) exists in the pipe plane in relation to which the pipe axis does not have an angle greater than 85°, particularly not greater than 83°, at any point.

7. Sensor as claimed in Claim 6, wherein, between the two bearing bodies (21, 22), the measuring pipe (10) has two outer straight sections (11, 12) and a central straight section (13), which are connected by two sections in the shape of an arc (15, 16), wherein the two bearing bodies (21, 22) are each arranged on the outer straight sections.

8. Sensor as claimed in one of the previous claims, wherein an angle bisector (w1, w2) extends between pipe central axes of the central straight section (13) and one of the outer straight sections (11, 12), wherein the vibration sensors are mounted, respectively, on the measuring pipe, between a point of intersection of one of the angle bisectors with the measuring pipe and a point on the outer straight section of the measuring pipe, which is at a distance of a bending radius of the circular section, particularly a half bending radius, preferably a quarter bending radius, from the transition of the circular section to the outer straight section.

9. Sensor as claimed in one of the previous claims, wherein, with regard to the translational vibrational degrees of freedom and the rotational vibrational degrees of freedom of the support plate in relation to the sensor housing, the pipe inlet section and the pipe outlet section contribute to a reference value specific to the degree of freedom, in addition to the spring or springs, wherein a contribution of the pipe inlet section does not deviate from a corresponding contribution of the pipe outlet section by more than 10%, wherein the joint contribution of the pipe inlet section and the pipe outlet section to the reference values specific to the degree of freedom is not more than 10%.

10. Sensor as claimed in one of the previous claims, wherein the pipe inlet section and the pipe outlet section essentially have the same pipe cross-section as the measuring pipe, the same material as the measuring pipe, and are made from a single piece with the measuring pipe.

11. Sensor as claimed in one of the previous claims, wherein the natural frequencies of the translational vibrational degrees of freedom and the rotational vibrational degrees of freedom of the support plate are not less than 70 Hz, particularly not less than 100 Hz and/or are not greater than 400 Hz.

12. Sensor as claimed in Claim 7 or a dependent claim, wherein an angle bisector (w1, w2) extends between a pipe central axis of the central straight section (13) and a pipe central axis of one of the outer straight sections (11, 12), wherein a coordinate system is defined with a z-axis in the pipe plane that is perpendicular to the angle bisectors (w1, w2), wherein the axis of the two-fold rotational symmetry forms the x-axis, wherein an x-z plane defined by the x-axis and the z-axis cuts the outer straight sections at a distance from the bearing bodies.

13. Sensor as claimed in one of the previous claims, wherein the vibration exciter is arranged at the center of the two-fold rotational symmetry, and wherein the vibration exciter is configured to excite flexural vibrations perpendicular to the pipe plane.

14. Sensor as claimed in Claim 7 or a dependent claim, wherein an angle bisector (w1, w2) extends, in each case, between a pipe central axis of the central straight section (13) and a pipe central axis of one of the outer straight sections (11, 12), wherein a coordinate system is defined with a z-axis in the pipe plane that is perpendicular to the angle bisectors (w1, w2), wherein the axis of the two-fold rotational symmetry forms the x-axis, wherein the y-axis is parallel to the angle bisectors and passes through the point of intersection of the x-axis and the z-axis, wherein a characteristic basic surface of the measuring pipe is defined by a rectangle whose sides, in the z-direction, pass through a point of intersection of one of the angle bisectors with the pipe axis of a curved section and, in the y-direction, pass through a point of intersection of one of the bearing bodies with the pipe axis of the measuring pipe, wherein the ratio of the rectangle surface to the inner diameter of the measuring pipe is not greater than 8000, particularly not greater than 6000, and preferably not greater than 5000.

15. Sensor as claimed in one of the previous claims, wherein the inner diameter of the measuring pipe is not greater than 5 mm.

## Revendications

1. Capteur vibronique (100) destiné à la mesure du débit massique d'un produit fluide, lequel capteur comprend :
une section d'entrée de tube (18) ;
un tube de mesure apte à vibrer (10) destiné à guider le produit, le tube de mesure étant courbé dans sa position de repos dans un plan de tube ;
une section de sortie de tube (19) ;
au moins un excitateur de vibrations (53) destiné à exciter des vibrations de flexion du tube de mesure (10) dans un mode utile de vibration de flexion ;
au moins deux capteurs de vibrations destinés à mesurer les vibrations du tube de mesure ;
un système de support avec une plaque de support (30), au moins un corps de palier côté entrée (21) et au moins un corps de palier côté sortie (22) ; et
un boîtier de capteur ;
le système de support présentant des modes de vibration du système de support qui comprennent des déformations élastiques de la plaque de support (30) ;
le tube de mesure (10) étant relié de façon fixe à la plaque de support (30) au moyen du corps de palier côté entrée (21) et au moyen du corps de palier côté sortie (22) et étant limité par les corps de palier,
le tube de mesure (10) étant raccordé côté entrée à la section d'entrée de tube (18) et côté sortie à la section de sortie de tube (19) et pouvant être raccordé par cette dernière à une conduite,
la section d'entrée de tube (18) et la section de sortie de tube (19) étant respectivement reliées de façon fixe au boîtier de capteur (40) ;
la plaque de support étant montée élastiquement par rapport au boîtier de capteur par l'intermédiaire du ou des paliers à ressort, de sorte qu'elle présente trois degrés de liberté de vibration en translation et trois degrés de liberté de vibration en rotation,
les fréquences propres des vibrations de la plaque de support par rapport au boîtier de l'appareil de mesure étant inférieures à une fréquence propre du mode utile de vibration de flexion en raison des degrés de liberté de vibration en translation et des degrés de liberté de vibration en rotation,
la fréquence propre du mode utile étant inférieure aux fréquences propres des modes de vibration du système de support,
le tube de mesure présentant pour l'essentiel une symétrie de rotation digyre par rapport à un axe perpendiculaire au plan de tube,
un facteur d'étalonnage (Calf) décrivant en première approximation une proportionnalité entre un débit massique à travers le tube de mesure et une différence de phase entre des vibrations du tube de mesure vibrant dans le mode utile de vibration de flexion à l'emplacement des deux capteurs de vibration,
**caractérisé en ce que**
la plaque de support (30) présente un certain nombre de paliers à ressort (31, 32, 33, 34), notamment en forme de spirale, un palier à ressort étant respectivement dégagé par au moins une découpe dans la plaque de support,
les capteurs de vibrations sont positionnés de telle sorte qu'une dépendance de la vitesse de rotation du facteur d'étalonnage (Calf) - lors de rotations du capteur autour d'un axe de rotation qui est perpendiculaire à l'axe de symétrie de la symétrie de rotation digyre et perpendiculaire à un axe longitudinal du capteur de mesure - ne dépasse pas la valeur d'un minimum de la dépendance de la vitesse de rotation de plus de 10 % de sa valeur.

2. Capteur selon la revendication 1, pour lequel les corps de palier (21, 22) sont positionnés de telle sorte que la fréquence propre du mode utile présente un écart de fréquence par rapport à la fréquence propre suivante d'un autre mode de vibration du tube de mesure, qui n'est pas inférieur à une valeur limite d'écart de fréquence, la valeur limite d'écart de fréquence étant d'au moins 2 %, notamment d'au moins 4 % et de préférence d'au moins 8 % de la fréquence propre du mode utile.

3. Capteur selon la revendication 1, pour lequel un facteur d'étalonnage (Calf) décrit en première approximation une proportionnalité entre un débit massique à travers le tube de mesure et une différence de phase entre les vibrations du tube de mesure vibrant dans le mode utile de vibration de flexion à l'emplacement des deux capteurs de vibration, une fonction d'évaluation, laquelle est proportionnelle à l'écart de fréquence et inversement proportionnelle à la fréquence propre du mode utile et au facteur d'étalonnage Calf, présentant un maximum local ou absolu, les corps de palier étant positionnés de telle sorte que la fonction d'évaluation ne soit pas inférieure à la valeur du maximum de plus de 8 %, notamment de plus de 4 % et de préférence de plus de 2 %.

4. Capteur selon l'une des revendications précédentes, pour lequel le mode utile est un mode de vibrations de flexion F3.

5. Capteur selon l'une des revendications précédentes, pour lequel les fréquences propres des vibrations de la plaque de support par rapport au boîtier de l'appareil de mesure en raison des degrés de liberté de vibration en translation et des degrés de liberté de vibration en rotation sont au plus égales à la moitié de la fréquence propre du mode utile de vibration de flexion, et la fréquence propre du système de support étant au moins égale au double de la fréquence propre du mode utile.

6. Capteur selon l'une des revendications précédentes, pour lequel le tube de mesure présente un tracé en forme de S, une direction longitudinale (z) existant dans le plan de tube, direction par rapport à laquelle l'axe de tube ne présente en aucun point un angle supérieur à 85°, notamment pas supérieur à 83°.

7. Capteur selon la revendication 6, pour lequel le tube de mesure (10) présente, entre les deux corps de palier (21, 22), deux sections droites extérieures (11, 12) et une section droite centrale (13), qui sont reliées par deux sections en arc de cercle (15, 16), les deux corps de palier (21, 22) étant disposés respectivement sur les sections droites extérieures.

8. Capteur selon l'une des revendications précédentes, pour lequel une bissectrice (w1, w2) s'étend respectivement entre des axes centraux de tube de la section droite centrale (13) et l'une des sections droites extérieures (11, 12), les capteurs de vibrations étant respectivement montés sur le tube de mesure, entre un point d'intersection de l'une des bissectrices avec le tube de mesure et un point sur la section droite extérieure du tube de mesure, qui est éloigné d'un rayon de courbure de la section circulaire, notamment d'un demi-rayon de courbure, de préférence d'un quart de rayon de courbure, de la transition de la section circulaire à la section droite extérieure.

9. Capteur selon l'une des revendications précédentes, pour lequel la section d'entrée de tube et la section de sortie de tube contribuent à une grandeur indicative spécifique au degré de liberté, en complément du ou des ressorts, en ce qui concerne les degrés de liberté de vibration en translation et les degrés de liberté de vibration en rotation de la plaque de support par rapport au boîtier du capteur, une contribution de la section d'entrée de tube ne s'écartant pas de plus de 10 % d'une contribution correspondante de la section de sortie de tube, respectivement, la contribution commune de la section d'entrée de tube et de la section de sortie de tube aux grandeurs indicatives spécifiques au degré de liberté n'étant pas supérieure à 10 %.

10. Capteur selon l'une des revendications précédentes, pour lequel la section d'entrée de tube et la section de sortie de tube présentent sensiblement la même section que le tube de mesure, le même matériau que le tube de mesure, et sont fabriquées d'une seule pièce avec le tube de mesure.

11. Capteur selon l'une des revendications précédentes, pour lequel les fréquences propres des degrés de liberté de vibration en translation et des degrés de liberté de vibration en rotation de la plaque de support ne sont pas inférieures à 70 Hz, notamment pas inférieures à 100 Hz et/ou pas supérieures à 400 Hz.

12. Capteur selon la revendication 7 ou une revendication qui en dépend, pour lequel une bissectrice (w1, w2) s'étend respectivement entre un axe central de tube de la section droite centrale (13) et un axe central de tube de l'une des sections droites extérieures (11, 12), un système de coordonnées avec un axe z étant défini dans le plan de tube, lequel plan est perpendiculaire aux bissectrices (w1, w2), l'axe de la symétrie de rotation digyre formant l'axe x, un plan x-z défini par l'axe x et l'axe z coupant les sections droites extérieures à une certaine distance des corps de palier.

13. Capteur selon l'une des revendications précédentes, pour lequel l'excitateur de vibrations est disposé au centre de la double symétrie de rotation, et l'excitateur de vibrations étant adapté pour exciter des vibrations de flexion perpendiculaires au plan de tube.

14. Capteur selon la revendication 7 ou une revendication dépendante de celle-ci, une bissectrice (w1, w2) s'étendant respectivement entre un axe central de tube de la section droite centrale (13) et un axe central de tube de l'une des sections droites extérieures (11, 12), un système de coordonnées étant défini avec un axe z dans le plan de tube qui est perpendiculaire aux bissectrices (w1, w2), l'axe de la double symétrie de rotation étant l'axe x, l'axe y étant parallèle aux bissectrices et passant par le point d'intersection de l'axe x et de l'axe z, une surface de base caractéristique du tube de mesure étant définie par un rectangle dont les côtés passent d'une part dans la direction z par respectivement un point d'intersection de l'une des bissectrices avec l'axe de tube d'un tronçon coudé et d'autre part dans la direction y par respectivement un point d'intersection de l'un des corps de palier avec l'axe de tube de mesure, le rapport entre la surface du rectangle et le diamètre intérieur du tube de mesure n'étant pas supérieur à 8 000, notamment pas supérieur à 6 000, et de préférence pas supérieur à 5 000.

15. Capteur selon l'une des revendications précédentes, pour lequel le diamètre intérieur du tube de mesure n'est pas supérieur à 5 mm.
